Europäisches Patentamt

European Patent Office

Office européen des brevets

(19)

(11) Publication number: **0 314 635**
**A2**

(12) # EUROPEAN PATENT APPLICATION

(21) Application number: **88830432.6**

(22) Date of filing: **25.10.88**

(51) Int. Cl.⁴: **B 60 K 17/02**
**F 16 D 3/70**

(30) Priority: **26.10.87 IT 5375587**

(43) Date of publication of application:
**03.05.89 Bulletin 89/18**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Massaccesi, Gianni**
**c/o Same S.p.A. Viale F. Cassani, 14**
**I-24047 Treviglio (Bergamo) (IT)**

(74) Representative: **Buzzi, Franco et al**
**c/o Jacobacci-Casetta & Perani S.p.A. Via Alfieri, 17**
**I-10121 Torino (IT)**

(54) **A Flexible coupling for connecting the driving flywheel and the input member of a gearbox power-shift unit for tractors.**

(57) A device for connecting the driving flywheel (2) and the input member (1) of a power-shift unit of a tractor gearbox is constituted by a flexible coupling including a plurality of axial resilient bushes (3) carried by the torsional coupling (1) and clamped to the driving flywheel (2) by respective screw coupling means (4).

EP 0 314 635 A2

# Description

## A flexible coupling for connecting the driving flywheel and the input member of a gearbox power-shift unit for tractors

The present invention provides a device for connecting a driving flywheel and a torsional coupling constituting the input member of a power-shift unit of a tractor gearbox.

Conventionally, this connection is achieved by means of a rigid coupling, normally with the use of axial locking screws between the driving flywheel and the torsional coupling.

This solution has problems of reliability due to the fact that, in the case of any misalignment of the driving flywheel and the torsional coupling of the power-shift unit, the clamping screws may be subject to strong bending stresses with a risk of breakage. Furthermore, torsional resonance can arise with this type of connection with the obvious consequences resulting therefrom.

The object of the present invention is to avoid these disadvantages and this object is achieved by means of a device for connecting a driving flywheel and a torsional input coupling of a power-shift unit, characterised in that it is constituted by a flexible coupling including a plurality of axial resilient bushes carried by the torsional coupling and clamped to the driving flywheel by respective screw coupling means.

By virtue of this solution, any lack of alignment between the driving shaft and the input shaft of the power-shift unit is effectively absorbed by the resilient bushes, thus preventing the screw coupling means from being subject to bending stresses.

In a preferred embodiment of the invention, the torsional coupling has a peripheral flange carrying a plurality of axial tubular members, each of which is traversed by a bush engaged at one end in a corresponding axial centering seat of the driving flywheel. The bush is locked to the flywheel by means of a bolt and is connected to the tubular member of the flange by an intermediate annular member of elastomeric material.

This conformation, as well as being simple and economical to manufacture, hinders torsional resonance arising by virtue of the non-linear torsional characteristics of the intermediate annular members of elastomeric material.

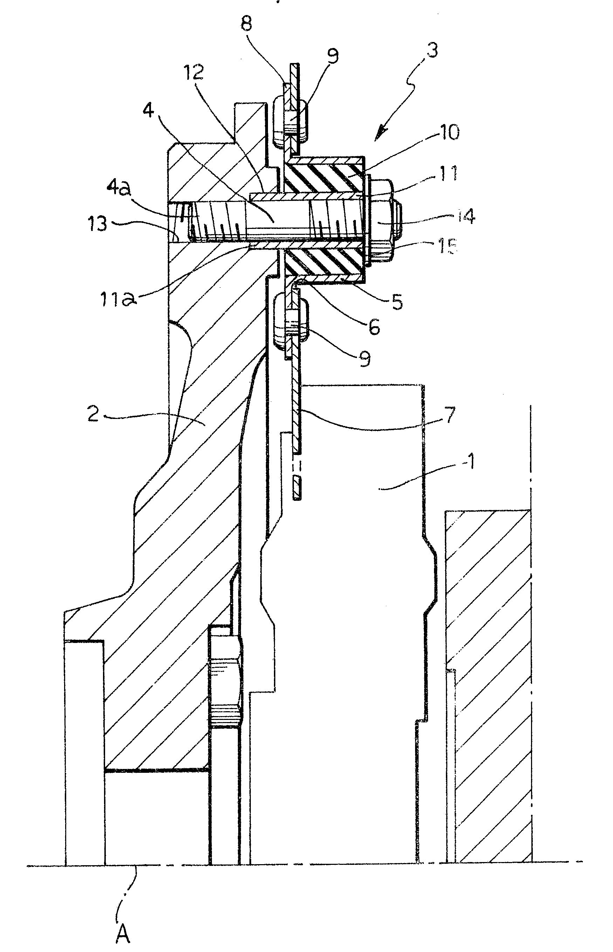

Further characteristics and advantanges of the invention will become clear in the course of the detailed description which follows with reference to the appended drawing, provided purely by way of non-limiting example, which shows a connecting device according to the invention schematically in partial axial section.

With reference to the drawing, a torsional coupling of known type constituting the input member of a power-shift unit of a tractor gearbox is indicated 1 and the driving flywheel of the tractor is indicated 2.

The connection between the torsional coupling 1 and the driving flywheel 2 is achieved according to the invention by means of a flexible coupling constituted by a plurality of axial resilient bushes 3 carried by the torsional coupling 1 and clamped to the driving flywheel 2 by means of respective bolts 4.

There are preferably, but not necessarily, six resilient bushes 3 grouped in three pairs equiangularly spaced around the axis A of the torsional coupling 1.

Each resilient bush 3 includes a tubular member 5 inserted through an aperture 6 in an annular peripheral flange 7 fixed rigidly to the torsional coupling 1. The tubular member 5 has a radial flange 8 bent back against the peripheral flange 7 and fixed rigidly thereto, for example, by rivets 9.

The outer surface of an annular member 10 of elastomeric material is vulcanised to the inner surface of the cup-shaped member 5, while its inner surface is vulcanised to a bush 11 which extends axially within the tubular member 5. The bush 11 projects at one end 11a beyond the peripheral flange 7 and is engaged in an axial centering seat 12 of the driving flywheel 2.

The bush 11 is traversed by the bolt 4 which at one end 4a is screwed into a threaded hole 13 in the flywheel 2 and at the other end carries a nut 14 tightened axially against the bush 11 and against the annular member 10 of elastomeric material through a washer 15.

The resilient connection achieved by the bushes 3 described above enables any misalignment between the torsional coupling 1 and the driving flywheel 2 to be absorbed and hence avoids bending stresses being transmitted to the bolts 4.

Moreover, the non-linear torsional characteristic of the annular members 10 of elastomeric material of the resilient bushes 3 has the advantage of preventing torsional resonance from arising.

## Claims.

1. A device for connecting a driving flywheel and a torsional coupling constituting the input member of a power-shift unit of a tractor gearbox, characterised in that it is constituted by a flexible coupling including a plurality of axial resilient bushes (3) carried by the torsional coupling (1) and clamped to the driving flywheel (2) by respective screw coupling means (4).

2. A device according to Claim 1, characterised in that the torsional coupling (1) has a peripheral flange (7) carrying a plurality of axial tubular members (5), each of which is traversed coaxially by a bush (11) engaged at one end (11a) in a corresponding axial centering seat (12) of the driving flywheel (2), the bush (11) being clamped to the driving flywheel (2) by a bolt (4) and being connected to the tubular member (5) of the peripheral flange (7) of the torsional coupling (1) by an intermediate angular member (10) of elastomeric material.